# FASCICULE DE BREVET EUROPEEN

(11) **EP 0 857 261 B1**
(45) Date de publication et mention de la délivrance du brevet: **23.07.2003**
(21) Numéro de dépôt: 97919118.6
(22) Date de dépôt: 17.09.1997
(51) Int. Cl.: F16D 13/75

(54) **EMBRAYAGE A FRICTION A DISPOSITIF DE RATTRAPAGE D'USURE, EN PARTICULIER POUR VEHICULE AUTOMOBILE**
REIBUNGSKUPPLUNG FÜR KRAFTFAHRZEUGE MIT EINER VERSCHLEISS-NACHSTELLEINRICHTUNG
FRICTION CLUTCH WITH WEAR ADJUSTING DEVICE, IN PARTICULAR FOR MOTOR VEHICLE

(30) Priorité: 17.09.1996 FR 9611297; 23.12.1996 FR 9615865
(43) Date de publication de la demande: 12.08.1998
(73) Titulaire: VALEO EMBRAYAGES s.a.s., 80009 Amiens Cedex 1 (FR)
(72) Inventeur: DOREMUS, Olivier, F-62690 Izel Lez Hameau (FR); BLARD, Michel, F-92130 Issy-les-Moulineaux (FR)
(74) Mandataire: Lemaire, Marc
(86) Numéro de dépôt international: FR9701644
(87) Numéro de publication internationale: WO98012445

(56) Documents cités:
- FR-A- 2 424 442
- FR-A- 2 739 159
- US-A- 5 090 536

## Description

La présente invention concerne un embrayage à friction, en particulier pour véhicule automobile, et se rapporte plus particulièrement à un embrayage équipé d'un dispositif compensateur d'usure pour compenser l'usure due notamment à l'usure des garnitures de friction, ledit dispositif, dit ci-après dispositif de rattrapage d'usure, opérant au fur et à mesure de l'usure desdites garnitures.

Un embrayage à friction classique comporte généralement un plateau de réaction, éventuellement en deux parties pour formation d'un volant amortisseur, calé en rotation sur un premier arbre, usuellement un arbre menant tel que le vilebrequin du moteur à combustion interne, et supportant par sa périphérie externe un couvercle auquel est rattaché au moins un plateau de pression.

Le plateau de pression est solidaire en rotation du couvercle et du plateau de réaction tout en pouvant se déplacer axialement sous la sollicitation de moyens élastiques à action axiale commandés, généralement un diaphragme métallique prenant appui sur le couvercle, tandis qu'un disque de friction, portant des garnitures de friction à sa périphérie externe, solidaire en rotation d'un arbre, usuellement un arbre mené tel que l'arbre d'entrée de la boîte de vitesses, est intercalé entre le plateau de pression et le plateau de réaction de façon à être serré entre eux lorsque l'embrayage est en position d'engagement. Le diaphragme commande le déplacement axial du plateau de pression lorsqu'il est actionné par une butée de débrayage. Plus précisément la butée de débrayage agit sur le dispositif débrayeur de l'embrayage (les doigts du diaphragme), lequel contrecarre alors l'action des moyens débrayeurs de l'embrayage (la partie périphérique du diaphragme en forme de rondelle Belleville) agissant sur le plateau de pression.

Au cours de la durée de vie d'un tel embrayage, les garnitures de friction ainsi que les contre-matériaux, plateau de pression et plateau de réaction, s'usent, ce qui provoque une variation de la position du plateau de pression et celles des moyens élastiques à action axiale et de la butée de débrayage, d'où il s'ensuit une variation de la force de serrage entre le disque de friction, d'une part, et les plateaux de pression et de réaction, d'autre part, en raison des modifications des conditions (positions) de travail du diaphragme, et la force nécessaire pour débrayer s'en trouve affectée. En dotant un tel embrayage d'un dispositif de rattrapage d'usure, on évite ces inconvénients, le diaphragme, ainsi que la butée de débrayage, usuellement en appui constant sur le diaphragme, occupant globalement la même position lorsque l'embrayage est en position d'engagement.

On a déjà proposé, dans la demande de brevet français déposée le 21 Septembre 1995 sous le numéro 95 11090 et publié sous le numéro 2 739 159, un embrayage à friction, notamment pour véhicule automobile, du genre comportant un plateau de réaction destiné à être calé en rotation sur un arbre menant, un disque de friction, portant à sa périphérie externe des garnitures de friction, destiné à être calé en rotation sur un arbre mené, un plateau de pression, un couvercle fixé sur le plateau de réaction, des moyens élastiques à action axiale agissant entre, d'une part, le couvercle et, d'autre part, le plateau de pression par l'intermédiaire de moyens d'appui, le plateau de pression étant solidaire en rotation du couvercle tout en pouvant se déplacer axialement par rapport à lui et étant soumis à l'action de moyens élastiques de rappel rappelant le plateau de pression axialement vers le couvercle, ledit embrayage comportant également un dispositif de rattrapage d'usure comprenant des moyens à rampes disposées circonférentiellement, placés axialement entre les moyens d'appui et le plateau de pression et adaptés à être entraînés en rotation grâce à une denture qu'ils portent à leur périphérie et avec laquelle coopère une vis sans fin, des moyens d'entraînement en rotation de la vis sans fin étant prévus, rendus opérationnels par l'usure des garnitures de friction lorsque l'embrayage est embrayé, ainsi que des moyens anti-retour empêchant la vis sans fin de tourner dans le sens contraire de celui dans lequel elle est entraînée en rotation par les moyens d'entraînement en rotation lorsqu'ils sont opérationnels, les moyens d'entraînement en rotation de la vis sans fin étant constitués par une roue à rochet solidaire en rotation de la vis sans fin, et les moyens anti-retour étant constitués par un cliquet qui coopère avec la roue à rochet.

Grâce aux moyens anti-retour constitués par un cliquet qui coopère avec la roue à rochet, on empêche un fonctionnement intempestif du dispositif de rattrapage d'usure, compte-tenu notamment des vibrations auxquelles est soumis l'embrayage, alors qu'il n'y a pas d'usure.

Un tel dispositif fonctionne bien et donne satisfaction ; la présente invention a pour objet un embrayage du type ci-dessus dans lequel le nombre de pièces est réduit et dont le montage est simplifié.

Ainsi, selon l'invention, un embrayage à friction du type ci-dessus est caractérisé par le fait que le cliquet anti-retour fait partie d'un organe élastique qui porte également une languette de commande pour l'actionnement en rotation de la roue à rochet.

Grâce à l'invention le dispositif de rattrapage d'usure a un nombre de pièces réduit, résiste mieux aux phénomènes de la force centrifuge et est d'un fonctionnement plus sûr du fait que le cliquet anti-retour est monobloc avec la languette de commande.

Avantageusement, la course de la languette de commande, lors de l'opération de débrayage, est limitée par une butée dite de contrôle.

De préférence, la vis sans fin et la roue à rochet sont portées par un axe supporté par un support.

L'embrayage peut être du type poussé ; il peut également être du type tiré.

Dans une forme de réalisation, le support est en forme de U ayant une âme et deux ailes destinées à supporter l'axe ; les ailes du support se prolongent selon des bras fixés par leur extrémité sur le bord d'une ouverture transversale du couvercle ; cette ouverture est prévue dans une excroissance radiale définissant un logement pour le dispositif de rattrapage d'usure.

L'organe élastique est en forme générale de crosse dont chaque extrémité est munie d'un retour vers l'intérieur ; la partie de plus grande longueur de la crosse croit en largeur vers son extrémité se terminant selon un retour qui porte en bout la languette de commande ; la partie de plus petite longueur de la crosse a son retour formant cliquet anti-retour qui s'étend globalement parallèlement à la languette de commande en étant à distance de celle-ci en sorte que, lorsque l'organe élastique et la roue à rochet sont montés dans le support, le cliquet anti-retour et la languette de commande coopèrent chacun avec un pied de dent ; pour son montage dans le support, l'organe élastique porte latéralement des bras en équerre disposés de part et d'autre de la partie élastique en forme de crosse, orthogonalement par rapport à celle-ci, et l'extrémité libre des bras en équerre porte des trous pour l'axe.

Le support équipé de la vis sans fin, de la roue à rochet, de l'organe élastique, du ressort et de l'axe constitue un sous-ensemble prêt à être installé dans le couvercle ce qui permet de réduire en final les temps d'assemblage.

La partie de grande longueur de la crosse de l'organe élastique vient en butée contre les bras du support.

De préférence, le support est en forme de U, ayant une âme et deux ailes, chacune portant un trou adapté à recevoir l'axe du dispositif, l'âme portant latéralement une patte à l'équerre dirigée vers l'extérieur destinée à être fixée sur le rebord externe du couvercle ; les ailes du support présentent, du côté opposé à celui où est située la patte, un prolongement axial dont l'extrémité est pliée vers l'extérieur pour constituer une patte de fixation parallèle à la patte ci-dessus et destinée à être fixée au fond du couvercle ; sur leur tranche dirigée vers l'âme, lesdits prolongements sont munis de retours dirigés l'un vers l'autre en s'étendant globalement parallèlement à l'âme et destinés à constituer des butées.

L'organe élastique est en forme de cavalier et comprend un corps plan allongé portant à chacune de ses extrémités un bras muni d'un trou adapté à recevoir l'axe ; sur l'un de ses bords longitudinaux, le corps se prolonge selon une extension en oblique du même côté que celui où sont placés les bras ; des échancrures ménagées dans le corps limitent l'extension par rapport aux extrémités du corps portant les bras ; l'extrémité libre de l'extension est munie d'un retour qui se prolonge selon une languette de commande s'étendant en direction du corps en étant globalement parallèle à celui-ci ; une découpe est ménagée dans l'extension ; à la faveur de cette découpe, et d'échancrures dans le corps, est réalisé le cliquet anti-retour.

De préférence, le support est en forme générale de L ayant deux ailes dont l'une est destinée à supporter l'axe et dont l'autre est destinée à la fixation du support sur le couvercle ; l'aile supportant l'axe traverse le diaphragme entre deux de ses doigts.

Avantageusement, l'organe élastique est en forme générale de cavalier et comprend un corps plan portant à chacune de ses extrémités un bras muni d'un trou adapté à recevoir l'axe ; les deux bras sont parallèles et s'étendent du même côté et globalement perpendiculairement par rapport au corps ; sur l'un de ses bords longitudinaux, le corps se prolonge selon une extension qui comprend une première partie dans le prolongement du corps, une deuxième partie dirigée dans le sens opposé à celui des bras en faisant un angle aigu avec le corps, une troisième partie formant un U avec la deuxième partie et s'étendant parallèlement à celle-ci, et une quatrième partie dirigée vers le corps en étant parallèle à celui-ci, à un niveau légèrement supérieur en sorte qu'elle s'étend entre les bras ; cette quatrième partie constitue directement ou non une languette de commande, le corps portant, sur son bord longitudinal opposé à celui où se situe l'extension, le cliquet anti-retour ; une échancrure ménagée dans chacun des bras limite la course de la languette de commande, parallèlement au corps, au moins en éloignement du corps.

Avantageusement, les moyens élastiques à action axiale sont constitués par un diaphragme.

Pour mieux faire comprendre l'objet de l'invention, on va en décrire maintenant, à titre d'exemples, purement illustratifs et non limitatifs, des modes de réalisation représentés sur les dessins annexés.
- la figure 1 est une vue partielle en coupe, selon la ligne II de la figure 2, d'un embrayage équipé d'un dispositif de rattrapage d'usure selon l'invention ;
- la figure 2 est une vue partielle en coupe de l'embrayage, selon la ligne II-II de la figure 1, partiellement arraché
- la figure 3 est une vue partielle en coupe selon la ligne III-III de la figure 2 ;
- la figure 4 est une vue en perspective du dispositif de rattrapage sans son support ;
- la figure 5 est une vue en perspective montrant l'organe élastique
- les figures 6 à 8 montrent le support du dispositif de rattrapage : la figure 6 est une vue en plan, la figure 7 est une vue en coupe selon la ligne VII-VII de la figure 6, et la figure 8 est une vue en coupe selon la ligne VIII-VIII de la figure 6 ;
- la figure 9 est une vue partielle en plan montrant l'appendice actionneur du diaphragme ;
- la figure 10 est une vue de côté, selon la flèche X de la figure 11, montrant les moyens à rampes ;
- la figure 11 est une vue en plan, avec arrachement partiel, de l'embrayage sans son diaphragme ;
- la figure 12 est une vue en coupe selon la ligne XII-XII de la figure 11
- la figure 13 est une vue en coupe selon la ligne XIII-XIII de la figure 11
- la figure 14 est une vue en coupe selon la ligne XIV-XIV de la figure 11
- la figure 15 est une vue en coupe selon la ligne XV-XV de la figure 11
- les figures 16 à 19 sont des vues en coupe partielle analogue à la figure 1, montrant diverses positions des éléments constitutifs de l'embrayage; sur la figure 16 l'embrayage est débrayé, garnitures neuves ; sur la figure 17 l'embrayage est embrayé garnitures usées ; sur la figure 18 l'embrayage est débrayé, garnitures usées, et sur la figure 19, l'embrayage est embrayé, usure rattrapée ;
- la figure 20 est une vue partielle en plan d'un embrayage équipé d'une variante de dispositif de rattrapage d'usure selon l'invention ;
- la figure 21 est une vue en coupe selon la ligne XXI-XXI de la figure 20
- la figure 22 est une vue en perspective montrant le dispositif des figures 20 et 21 sans son support ;
- la figure 23 est une vue en perspective du support
- la figure 24 est une vue en perspective du dispositif élastique
- la figure 25 est une vue latérale selon la flèche XXV de la figure 20 ;
- la figure 26 est une vue partielle en plan montrant l'appendice actionneur du diaphragme ;
- la figure 27 est une vue partielle en plan d'un embrayage équipé d'encore une autre variante de dispositif de rattrapage d'usure selon l'invention ;
- la figure 28 est une vue partielle en coupe selon la ligne XXVIII-XXVIII de la figure 27 ;
- la figure 29 est une vue partielle latérale selon la flèche XXIX de la figure 27 ;
- la figure 30 est une vue en coupe du support portant la vis sans fin
- la figure 31 est une vue en perspective de la vis sans fin intégrant la roue à rochet ;
- la figure 32 est une vue en perspective de l'organe élastique
- les figures 33 à 35 représentent chacune respectivement une variante du ressort d'actionnement ;
- la figure 36 est analogue à la figure 28 et représente une variante.

Dans ces figures, l'embrayage à diaphragme 3, 53, 203 comporte un couvercle 2, 52, 202 de forme creuse.

Ici, le couvercle est métallique en étant en tôle emboutie.

Ce couvercle comporte un fond et des moyens pour sa fixation à un plateau de réaction, éventuellement divisé pour formation d'un volant amortisseur.

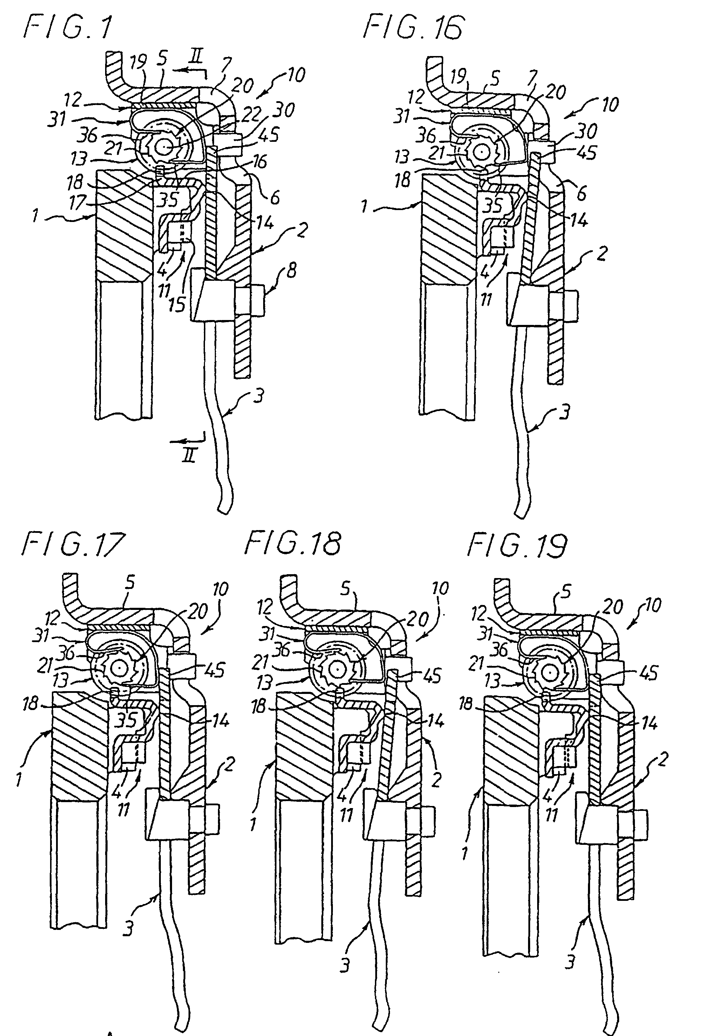

Dans les modes de réalisation des figures 1 à 26 le couvercle 2, 52 est globalement en forme d'assiette creuse et comporte à sa périphérie externe un rebord radial formant des moyens de fixation du couvercle au plateau de réaction, ledit rebord étant doté de trous pour passage d'organes de fixation, tels que des vis, du couvercle au plateau de réaction.

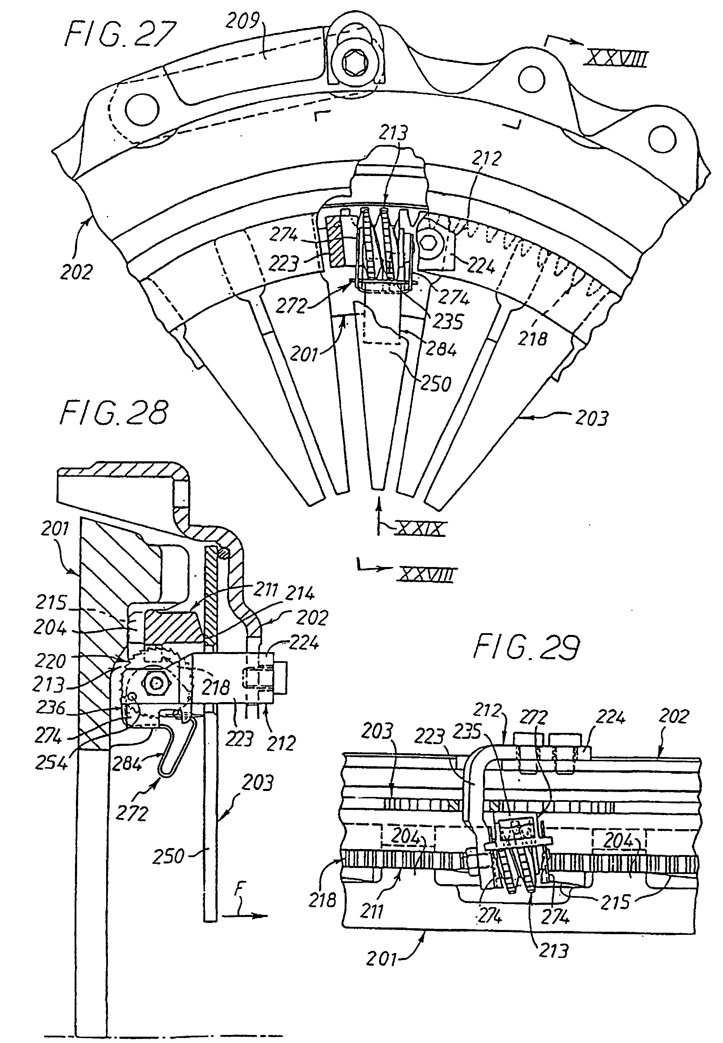

Dans les modes de réalisation des figures 27 à 36, les moyens de fixation du couvercle consistent en une jupe annulaire d'orientation axiale prolongeant un rebord radial doté de trous pour passage des organes de fixation, tels que des vis, du couvercle 202 au plateau de réaction.

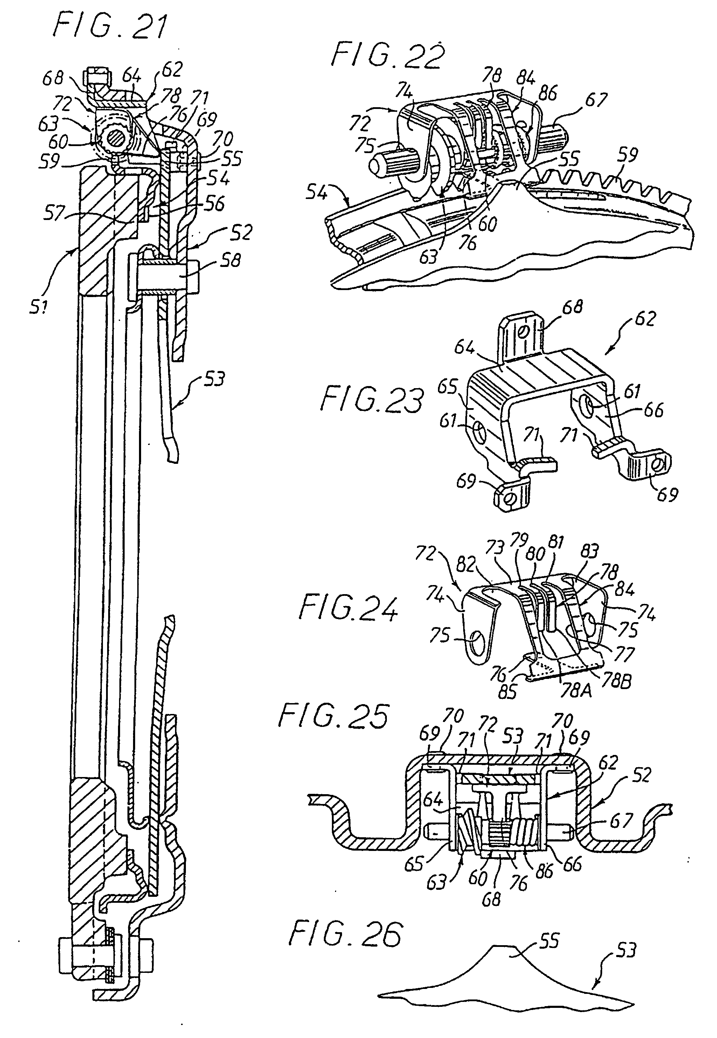

Dans le mode de réalisation des figures 1 à 26, l'embrayage est du type poussé, c'est-à-dire qu'il faut, à l'aide d'une butée de débrayage, non représentée, agir en poussant sur l'extrémité interne des doigts du diaphragme 3, 53 pour désengager (débrayer) l'embrayage. D'une manière générale les doigts du diaphragme forment des moyens débrayeurs pour contrecarrer sous l'action de la butée de débrayage, l'action des moyens élastiques embrayeurs constitués par la partie périphérique, en forme de rondelle Belleville, du diaphragme. Pour ce faire, le fond du couvercle 2, 52 porte, d'une part, un appui primaire consistant par exemple en jonc, ou dans les figures 1, 21 en un embouti réalisé dans le fond du couvercle à la périphérie interne celui-ci, et, d'autre part, en regard de l'appui primaire, un appui secondaire sous forme de têtes profilées de colonnettes 8, 58 (figure 1), de couronne portées par des colonnettes 58 (figure 21) ou tout autre moyen. Le diaphragme 3, 53, par la périphérie interne de sa rondelle Belleville, est monté de manière basculante entre lesdits appuis primaire et secondaire. Par la périphérie externe de sa rondelle Belleville, il est en contact avec les zones d'appui 14, décrites ci-après.

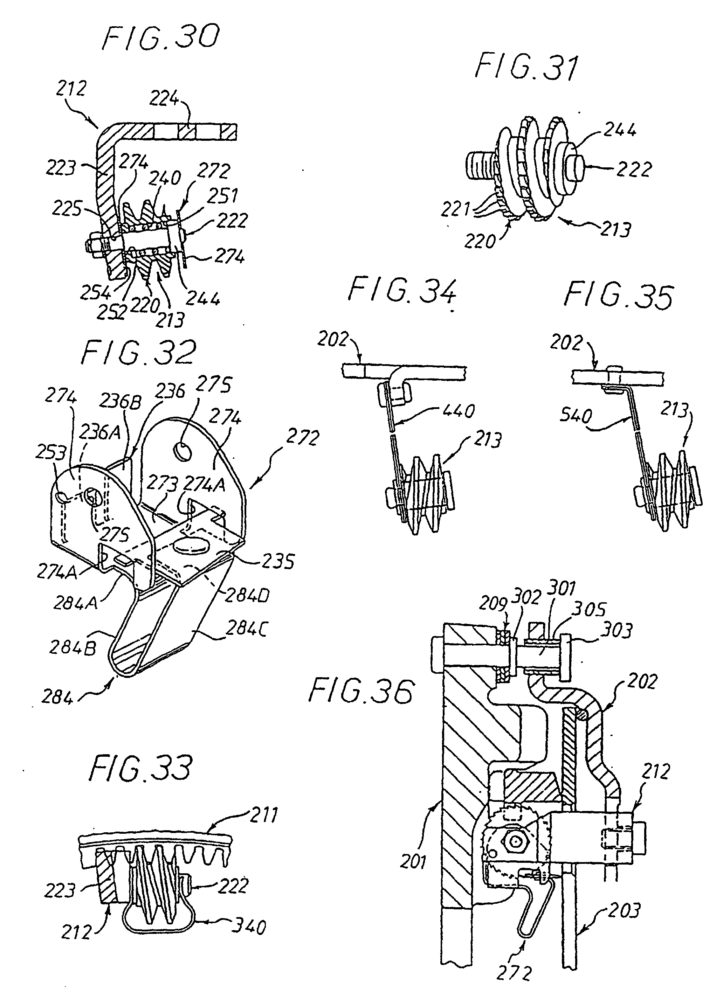

Dans les modes de réalisation des figures 27 à 36, l'embrayage est du type tiré en sorte qu'il faut agir en traction sur l'extrémité interne des doigts du diaphragme 203 pour désengager (débrayer) l'embrayage. La partie périphérique externe de la rondelle Belleville du diaphragme prend appui sur le fond du couvercle, dans les figures 28 et 36 sur un jonc non référencé porté par la périphérie externe du fond du couvercle, en variante sur un embouti ménagé dans ledit fond. La partie périphérique interne de cette rondelle Belleville est en contact avec un appui 214 décrit ci-après.

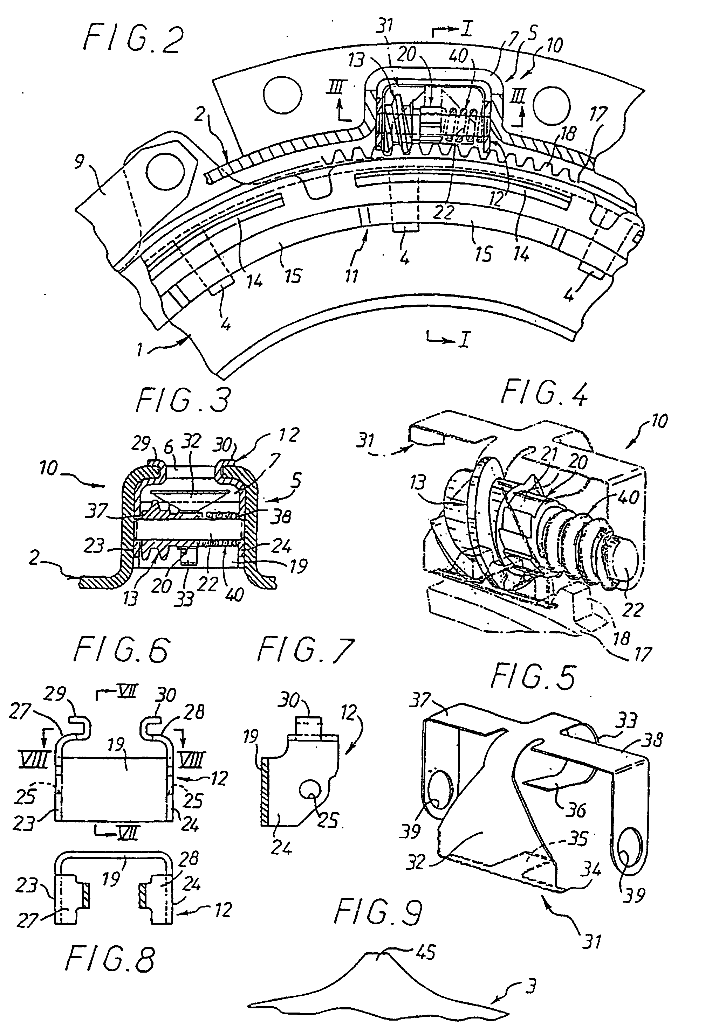

En se reportant aux figures 1 et 2, on voit un mécanisme d'embrayage à de friction, notamment pour véhicule automobile, qui comprend un plateau de pression 1 destiné par une face de friction à coopérer avec un disque de friction non représenté, portant à sa périphérie externe des garnitures de friction, qui coopère lui-même avec un plateau de réaction. Le plateau de réaction, non représenté, est destiné à être calé en rotation sur un arbre menant, tel que le vilebrequin du moteur à combustion interne. Le disque de friction est solidaire en rotation d'un arbre mené tel que l'arbre d'entrée de la boîte de vitesses et est représenté de manière schématique pour exemple dans le document FR-A-2 739 159 précité ou FR-A-2 559 446, ses garnitures de friction étant de manière usuelle associées à un dispositif de progressivité.

Le plateau de pression 1 est solidaire en rotation d'un couvercle 2 de forme creuse par l'intermédiaire de languettes tangentielles 9 qui, élastiques, constituent en même temps des moyens de rappel du plateau de pression 1 vers le couvercle 2, ici métallique en tôle emboutie.

Le plateau de pression 1, tout en étant solidaire en rotation du couvercle 2, est donc déplaçable axialement par rapport au couvercle 2 sous la sollicitation de moyens élastiques à action axiale commandés, ici un diaphragme 3 monté articulé sur le couvercle 2 grâce à des colonnettes 8 portées par le fond du couvercle 2 troué centralement. De manière connue, la colonnette 8 présente une tête profilée offrant un appui secondaire au diaphragme en regard d'un appui primaire formé par emboutissage du fond du couvercle 2 de forme creuse. Le diaphragme est monté pivotant entre ces appuis.

Pour maintenir, lorsque l'embrayage est embrayé, les moyens élastiques à action axiale 3, formant moyens embrayeurs de manière précipitée, dans une position indépendante de l'usure des garnitures du disque de friction, et dans une moindre mesure l'usure des plateaux de pression 1 et de réaction dont les faces, dites de friction, s'usent au contact des garnitures du disque, il est prévu un dispositif de rattrapage d'usure 10.

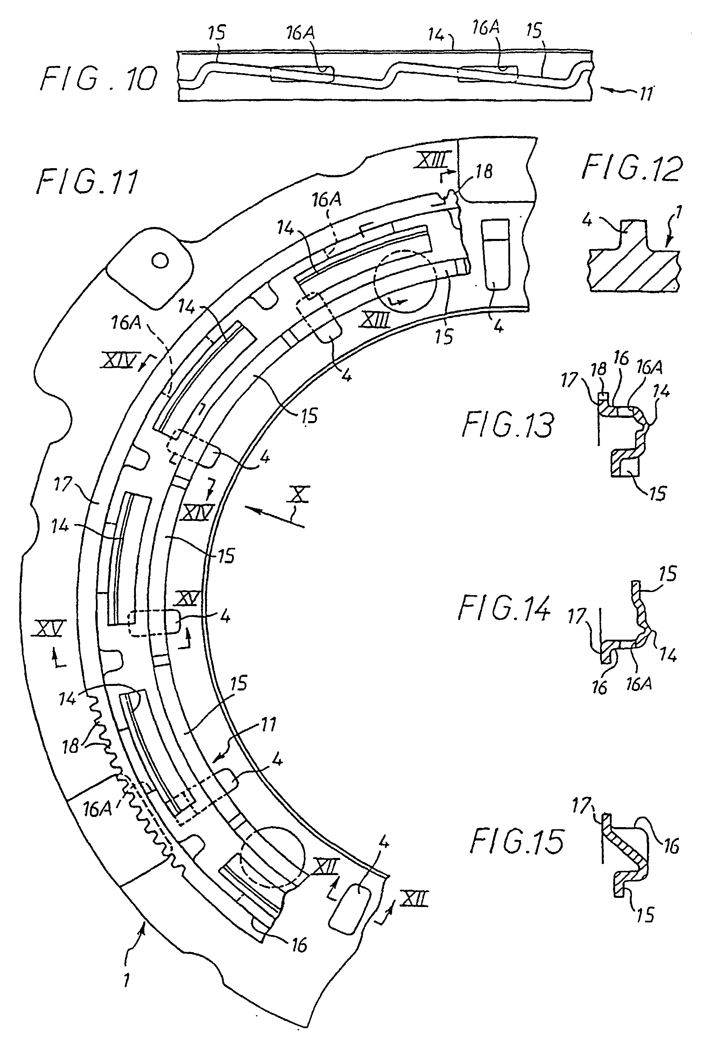

Le dispositif de rattrapage d'usure 10 comprend des moyens à rampes 11 disposées circonférentiellement ; plus précisément, ces moyens à rampes 11, mieux visibles sur les figures 2 et 10, sont constitués d'un anneau en tôle découpée et emboutie de façon à présenter des rampes 15 disposées circonférentiellement; ledit anneau présente également des zones d'appui 14 constituées par l'arête supérieure arrondie d'emboutis en arcs de cercle centrés sur l'axe de l'embrayage et placés radialement à l'extérieur par rapport aux rampes 15. Grâce au dispositif de rattrapage d'usure, la distance entre la face de friction du plateau de pression 1 et les zones d'appui 14, portées par le plateau de pression 1, augmente en fonction notamment de l'usure desdites garnitures, de manière décrite ci-après.

Le plateau de pression 1 présente, ici venus de moulage, sur sa face tournée vers le fond du couvercle 2, radialement au delà des colonnettes 8, des plots 4 répartis circonférentiellement à une distance l'un de l'autre qui correspond à celle qui sépare circonférentiellement deux rampes 15 successives, les plots 4 étant destinés à coopérer chacun avec une rampe 15.

Les moyens à rampes 11 sont placés axialement entre le diaphragme 3 et le plateau de pression 1 en sorte que les plots 4 reçoivent les rampes 15 et le diaphragme 3 coopère avec les zones d'appui 14 qui constituent ainsi les moyens d'appui par l'intermédiaire desquels le diaphragme 3 agit sur le plateau de pression 1. Cette disposition est économique et simple, les moyens à rampes 11 étant métalliques et obtenus par emboutissage, les plots 4 étant usinés en étant avantageusement chanfreinés pour coopérer avec les rampes 15.

L'une des zones d'appui 14 des moyens à rampes 11 est prolongée, figures 1 et 13, à sa périphérie externe par un rebord 16 parallèle à l'axe de l'embrayage se terminant selon un retour 17 transversal, c'est-à-dire s'étendant dans un plan perpendiculaire à l'axe de l'embrayage, muni à sa périphérie d'une denture 18, en sorte que les zones d'appui 14 peuvent être continues et que le rebord est centré extérieurement par une surépaisseur formant bossage du plateau de pression 1.

Avantageusement, le rebord axial 16 des moyens à rampes 11 présente des ouvertures 16A, ici de forme rectangulaire, facilitant leur ventilation. Le plateau de pression 1 présente à sa périphérie externe un bossage fractionné saillant en direction du fond du couvercle. Ce bossage, de forme annulaire, sert de centreur au rebord 16 et aux moyens à rampes, sa périphérie externe étant en contact intime avec la périphérie interne du rebord 16.

Le dispositif de rattrapage d'usure 10 comprend par ailleurs une roue à rochet 20 à dents inclinées 21 solidaire d'un axe 22 qui porte également une vis sans fin 13 ; le filet et le pas de la vis sans fin 13 sont adaptés à la denture 18 des moyens à rampes 11 ; la vis sans fin 13 est amenée à coopérer tangentiellement avec la denture 18 dans les conditions qui seront décrites ci-après, sachant que le système est irréversible, la vis 13 entraînant la denture 18 mais pas l'inverse.

L'axe 22 de la roue à rochet 20 est porté à rotation par un support 12, mieux visible sur les figures 6 à 8, en tôle découpée et pliée, en forme de U ayant une âme 19 et deux ailes 23, 24 destinées à supporter l'axe 22 ; à cet effet, chacune des ailes porte un trou circulaire 25 adapté au diamètre de l'axe 22.

Les ailes 23, 24 du support 12 se prolongent extérieurement selon des bras 27, 28 en forme de L s'étendant l'un vers l'autre perpendiculairement à l'âme 19 et se terminant chacun, lorsque le support 12 est monté sur le couvercle 2, par une extrémité en forme de C, respectivement 29 et 30, les deux extrémités en forme de C 29 et 30 étant disposées dos à dos au droit l'une de l'autre.

Le couvercle 2 présente une excroissance radiale 5 définissant un logement pour le dispositif 10 de rattrapage d'usure ; ce logement communique avec l'extérieur par une ouverture transversale 6 percée dans la paroi transversale du couvercle 2 ; les bords de cette ouverture transversale 6 sont adaptés à recevoir les extrémités 29 et 30 en forme de C du support 12 qui sont serties sur ces bords, comme le montre la figure 3, et qui, ainsi, fixent le support 12 sur le couvercle ; les figures 1, 2 et 3 montrent que le support 12 s'adapte parfaitement dans le logement, défini par l'excroissance radiale 5, ledit logement et le support 12, ici métallique, ayant des formes complémentaires ; à la jonction entre la paroi transversale du couvercle et le prolongement de la jupe cylindrique du couvercle qui limite ledit logement, une ouverture 7 facilite la ventilation du dispositif 10. Le support 12 est monté radialement au dessus du plateau de pression 1.

Le support 12 est adapté à recevoir un organe élastique 31 de plus faible épaisseur que le support 12, mieux visible sur les figures 4 et 5 ; l'organe élastique 31, ici métallique, est en forme générale de crosse dont chaque extrémité est munie d'un retour vers l'intérieur ; plus précisément, la partie 32 de plus grande longueur de la crosse croit en largeur vers son extrémité se terminant selon un retour 34 qui porte en bout une languette de commande 35 formant pièce de commande ; la partie 33 de plus petite longueur de la crosse à son retour 36, dit cliquet anti-retour, qui s'étant globalement parallèlement à la languette de commande 35 en étant à distance de celle-ci en sorte que, lorsque l'organe élastique 31 et la roue à rochet 20 sont montés dans le support 12, le cliquet anti-retour 36 et la languette de commande 35 coopèrent chacun avec un pied de dent, les deux dents concernées étant ici pratiquement diamétralement opposées, comme le montre la figure 1 ; pour son montage dans le support 12, l'organe élastique 31 porte latéralement des bras en équerre 37, 38 disposés de part et d'autre de la partie élastique en forme de crosse, orthogonalement par rapport à celle-ci, et l'extrémité libre des bras 37,38 en équerre porte des trous 39 dont le diamètre correspond à celui de l'axe 22.

Lorsque l'organe élastique 31 est monté dans le support 12, les extrémités libres des bras 37, 38 s'étendent entre les ailes 23, 24 du support 12, le long de celles-ci ; un ressort hélicoïdal 40 de compression est placé entre la roue à rochet 20 et l'extrémité libre du bras 38, en étant enroulé autour de l'axe 22 ; la vis sans fin 13 et la roué à rochet 20 sont taillées dans une même pièce ; comme on le voit, le support 12 équipé de cette même pièce, de l'organe élastique 31, du ressort 40 et de l'axe 22 constitue un sous-ensemble prêt à être installé dans le couvercle 2.

Le ressort hélicoïdal 40 constitue le moyen élastique de rattrapage, comme décrit ci-dessous ; la roue à rochet 20 est au droit du cliquet anti-retour 36 qui, , par coopération avec les dents 21 inclinées de la roue à rochet 20, empêche de tourner la roue à rochet 20, ainsi que la vis sans fin 13, dans le sens contraire à celui des aiguilles d'une montre, par rapport aux figures 1 et 16 à 19.

Le support 12, portant la roue à rochet 20, la vis sans fin 13 et le ressort hélicoïdal 40, étant solidaire du couvercle 2, le diaphragme 3 se déplace par rapport à lui lors des opérations de débrayage et de ré-embrayage ; le diaphragme 3 porte à sa périphérie un appendice radial dit actionneur 45, figure 9, s'étendant radialement à l'extérieur de la partie rondelle Belleville du diaphragme 3 pour coopérer avec la zone élargie de la partie de grande longueur 32 de l'organe élastique 31 ; on comprendra que, grâce à cette disposition, lors du basculement du diaphragme 3 lors des opérations de débrayage et de ré-embrayage, l'actionneur 45 déplace cette partie 32 de la droite vers la gauche, par rapport à la figure 1, et la languette de commande 35, par coopération avec les dents 21 de la roue à rochet 20, est amenée à faire tourner la roue à rochet 20 dans le sens horaire ; lorsque l'actionneur 45, au retour, est déplacé de la gauche vers la droite, l'élasticité de la partie 32 de l'organe élastique 31 et l'inclinaison des dents 21 font que cette partie 32 se déplace vers la droite en montant sur les dents 21 qui sont maintenues fixes en rotation par le cliquet anti-retour 36 et/ou les frottements internes.

Le dispositif de rattrapage d'usure qui vient d'être décrit fonctionne comme suit, le système vis sans fin 13-denture 18 étant irréversible, comme précisé ci-dessus.

La figure 1 représente l'embrayage engagé, les garnitures du disque de friction étant à l'état neuf et serrées entre le plateau de réaction, non représenté, et le plateau de pression 1. Dans cette position, la languette de commande 35 et le cliquet anti-retour 36, tous deux élastiquement déformables, ont leur extrémité au pied d'une dent de la roue à rochet 20

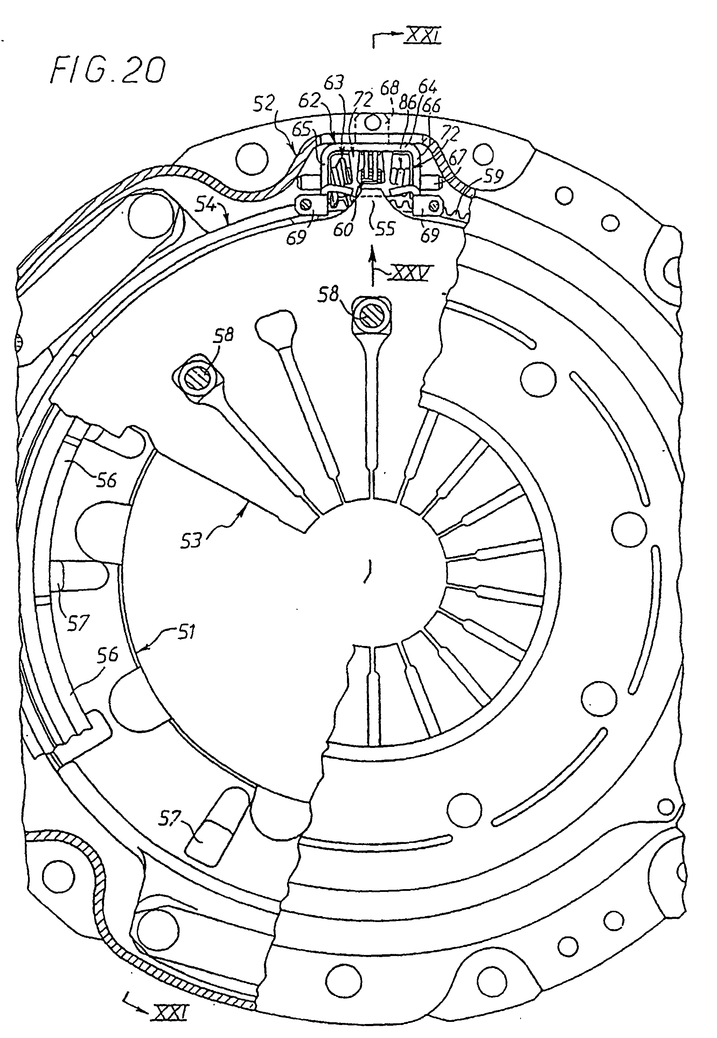

Lorsque l'embrayage est débrayé, le diaphragme 3 a basculé autour des colonnettes 8 entraînant à sa périphérie son appendice actionneur 45 vers le fond du couvercle 2 ; dans son déplacement, l'actionneur 45 libère progressivement la languette de commande 35 dont l'extrémité suit la rampe inclinée constituée par la dent dans le pied de laquelle elle se trouvait dans l'étape précédente, les dents 21 de la roue à rochet 20 étant réalisées en sorte que, lors de cette course de débrayage garnitures neuves, l'extrémité de la languette de commande 35 ne saute pas une dent, le cliquet anti-retour 36 maintenant la roue à rochet 20 ; ceci est obtenu par la venue en butée de la partie 32 de l'organe élastique 31, contre le support 12, plus précisément contre les bras 27, 28 du support 12 qui constituent une butée de contrôle et, selon une caractéristique de l'invention, limitent la course de retour de cette partie 32 quelle que soit celle de l'actionneur 45 du diaphragme 3, comme le montre la figure 16.

Lorsque les garnitures s'usent, comme on le sait le plateau de pression 1, toujours soumis à l'effort axial du diaphragme 3, se rapproche du plateau de réaction qui est fixe axialement comme le couvercle 2 ; l'actionneur 45 du diaphragme 3 se rapproche donc du plateau de réaction, c'est-à-dire donc de l'extrémité ouverte du couvercle 2, en entraînant dans son mouvement la languette de commande 35 ; la roue à rochet 20 tourne autour de son axe dans le sens horaire, sens pour lequel le cliquet anti-retour 36 n'assure pas sa fonction mais peut sauter d'une dent à l'autre ; l'embrayage engagé, garnitures usées, est représenté sur la figure 17. Cet entraînement en rotation de la roue à rochet 20 conduit la vis sans fin 13 à tourner également d'une petite quantité sur son axe ; les moyens de rampes 11 étant immobilisés par rapport au couvercle 3 sous l'effet de la charge du diaphragme 3, la vis sans fin 13 qui engrène avec la denture 18 des moyens de rampes 11 se visse en quelque sorte sur cette denture 18 en comprimant le ressort hélicoïdal 40, le sens du filet de la vis sans fin 13 étant prévu en sorte qu'il en soit ainsi.

Lors de l'opération de débrayage qui suit la phase d'usure qui vient d'être décrite, le plateau de pression 1 libère les garnitures en s'éloignant d'elles sous l'action des languettes tangentielles 9 qui ramènent vers le fond du couvercle 2 le plateau de pression 1 ainsi que les moyens à rampes 11 en contact avec le diaphragme 3 par leurs zones d'appui 14 et avec les plots 4 du plateau de pression 1 par leurs rampes 15. Le ressort hélicoïdal 40 sollicite la vis sans fin 13 vers l'aile 23 du support 12, qu'elle a quittée en phases d'usure, c'est-à-dire de la droite vers la gauche par rapport aux figures 2 et 3 ; la charge du diaphragme 3 n'étant plus appliquée sur les moyens à rampes 11, le seul effort à vaincre pour pouvoir faire tourner ces moyens à rampes 11 par rapport au plateau de pression 1 est l'effort de frottement généré par l'effort de rappel de languette tangentielles 9 ; si la charge du ressort hélicoïdal 40 est suffisante pour vaincre cet effort , alors le ressort 40 déplace la vis sans fin 13 qui est empêché de tourner sur elle même par la pression du cliquet anti-retour 36 et qui entraînera la denture 18 : en tournant sur elles-mêmes, les rampes 15 des moyens à rampes 11, par coopération avec les plots 4 du plateau de pression 1, éloigneront le plateau de pression 1 du fond du couvercle 2, augmentant ainsi la distance axiale entre la face de travail du plateau de pression 1 et les zones d'appui 14 des moyens à rampes 11, rattrapant (compensant) ainsi au moins en partie le déplacement du plateau de pression 1 dû à l'usure des garnitures. La charge du ressort hélicoïdal 40 étant fonction de la quantité dont il aura été comprimé par la vis sans fin 13 durant les phases d'usure, on voit que plusieurs opérations d'embrayage et de débrayage peuvent être nécessaires avant que le dispositif de rattrapage d'usure 10 n'entre en phase de rattrapage proprement dite, ceci étant fonction du dimensionnement relatif des pièces concernées ; à titre d'exemple, celles-ci peuvent être réalisées de telle sorte que cette phase de rattrapage proprement dite n'intervienne la première fois qu'après une usure correspondant à trois dixièmes de millimètres ; sur la figure 18, qui correspond à l'embrayage débrayé garnitures usées, on a supposé qu'il n'y a pas eu de rattrapage ; on a supposé également que l'usure a été suffisante pour que la roue à rochet 20 ait suffisamment tourné de sorte qu'au retour la languette de commande 35 a sauté une dent.

Lors de l'opération d'embrayage, la languette de commande 35, poussée par l'actionneur 45, fait tourner la roue à rochet 20 et les moyens à rampes 11, non encore serrés par le diaphragme 3, tournent et compensent le déplacement du plateau dû à l'usure en augmentant l'épaisseur entre la face de friction et les zones d'appui ; en fin de l'opération de rattrapage, figure 19, le diaphragme 3, la roue à rochet 20, le cliquet anti-retour 36 et la languette de commande 35 retrouvent la Position qu'ils occupaient à la figure 1.

Dans la variante qui vient d'être décrite, la vis sans fin 13 et la roue à rochet 21 sont d'une seule pièce ; bien entendu, la vis sans fin 13 pourrait être une pièce distincte et pourvue d'un alésage, ledit alésage et l'axe lui-même étant agencés de telle sorte que la vis sans fin peut coulisser le long de l'axe tout en étant solidaire en rotation dudit axe.

Les figures 20 à 26 représentent une variante de dispositif de rattrapage d'usure ; sur ces figures, on reconnaît un embrayage comportant un plateau de pression 51, un couvercle 52, un diaphragme 53, muni d'un appendice actionneur 55, articulé sur le couvercle 52 grâce à des colonnettes 58 portant une couronne roulée offrant un appui secondaire au diaphragme 53 ; les moyens à rampes 54 comprennent des rampes 56 qui coopèrent avec des plots 57 du plateau de pression et une denture 59 coopère avec une vis sans fin 63 elle même solidaire en rotation d'une roue à rochet 60, ayant un axe 67 sur lequel est enroulé un ressort 86. Le support 62, ici métallique, est monté radialement au dessus du plateau de pression 1.

Ici, le support 62, mieux visible sur la figure 23, est en forme de U, ayant une âme 64 et deux ailes, 65 et 66, chacune portant un trou 61 adapté à recevoir l'axe 67 du dispositif ; l'âme 64 porte latéralement une patte 68 à l'équerre dirigée vers l'extérieur destinée à être fixée sur le rebord externe du couvercle 52 par tin rivet. Le couvercle 52 présente une ouverture pour passage de l'âme 64 et est simplifié.

Les ailes 65 et 66 du support 62 présentent, du côté opposé à celui où est située la patte 68, un prolongement axial dont l'extrémité est pliée vers l'extérieur pour constituer une patte de fixation 69 parallèle à la patte 68 ci-dessus et destinée à être fixée au fond du couvercle 52 par un rivet 70 ; sur leur tranche dirigée vers l'âme 64, lesdits prolongements sont munis de retours 71 dirigés l'un vers l'autre en s'étendant globalement parallèlement à l'âme 64 et destinés à constituer des butées de contrôle dont le rôle apparaîtra ci-dessous ; les extrémités se faisant face desdits retours 71 sont à une distance suffisante l'une de l'autre pour permettre, sans le gêner, le débattement de l'actionneur 55 lors des opérations d'embrayage et de débrayage.

Ici, l'organe élastique 72, mieux visible sur la figure 24, est en forme de cavalier et comprend un corps 73 plan allongé portant à chacune de ses extrémités un bras 74 muni d'un trou 75 adapté à recevoir l'axe 67 ; les deux bras 74 sont parallèles, et s'étendent du même côté et globalement perpendiculairement par rapport au corps 73.

Sur l'un de ses bords longitudinaux, le corps 73 se prolonge selon une extension en oblique 84 du même côté que celui où sont placés les bras 74 ; des échancrures 82 et 83 ménagées dans le corps 73 limitent l'extension 84 par rapport aux extrémités du corps 73 portant les bras 74 ; par ailleurs, ces échancrures 82 et 83 confèrent à l'extension 84 une certaine élasticité.

L'extrémité libre de l'extension 84 est munie d'un retour 85 qui se prolonge selon une languette de commande 76 s'étendant en direction du corps 73 en étant globalement parallèle à celui-ci.

Une découpe 77 est ménagée dans l'extension 84 ; à la faveur de cette découpe 77, et d'échancrures 79, 80 et 81 dans le corps 73, est réalisé un cliquet anti-retour 78 composé de deux lames 78A et 78B ; les extrémités libres de celles-ci s'étendent globalement perpendiculairement au corps 73 et sont de longueurs légèrement différentes ; la différence de ces longueurs est telle que lorsque les lames 78A, 78B sont en appui élastique sur la roue à rochet 60, elle sont décalées parallèlement aux bras 74 d'une quantité inférieure à la longueur d'une dent de la roue à rochet 60 : ainsi, l'efficacité de la fonction anti-retour est améliorée, et ce par rapport à la solution où la roue à rochet. ne coopère qu'avec une seule lame anti-retour. Bien entendu, les lames peuvent être disposées à distance l'une de l'autre, par exemple à 180 degrés l'une de l'autre.

Cette variante fonctionne de la même façon que la précédente ; notons qu'ici, lors de l'opération de débrayage, la course de retour, ou d'armement, de la languette de commande 76 est limitée par la venue en butée de l'extension 84 de l'organe élastique 72 contre les retours 71 du support 62 de plus grande épaisseur que l'organe élastique 72 métallique.

En se reportant aux figures 27 à 36, on voit un mécanisme d'embrayage à friction, notamment pour véhicule automobile, qui comprend un plateau de pression 201 destiné à coopérer avec un disque de friction non représenté, portant à sa périphérie externe des garnitures de friction, qui coopère lui-même avec un plateau de réaction. Le plateau de réaction, non représenté, est destiné à être calé en rotation sur un arbre menant, tel que le vilebrequin du moteur à combustion interne. Le disque de friction est solidaire en rotation d'un arbre mené tel que l'arbre d'entrée de la boite de vitesses.

Le plateau de pression 201 est solidaire en rotation d'un couvercle 202 de forme creuse par l'intermédiaire de languettes tangentielles 209 qui, élastiques, constituent en même temps des moyens de rappel du plateau de pression 201 vers le couvercle 202.

Le plateau de pression 201, tout en étant solidaire en rotation du couvercle 202, est donc déplaçable axialement par rapport au couvercle 202 sous la sollicitation de moyens élastiques à action axiale commandés, ici un diaphragme 203 prenant appui sur le couvercle 202 par sa périphérie externe, l'embrayage étant ici du type tiré, l'opération de débrayage étant effectuée en agissant sur l'extrémité des doigts du diaphragme dans le sens de la flèche F de la figure 28.

Pour maintenir, lorsque l'embrayage est embrayé, les moyens élastiques à action axiale 203 dans une position indépendante de l'usure des garnitures du disque de friction, et dans une moindre mesure l'usure des plateaux de pression 201 et de réaction dont les faces, dites de friction, s'usent au contact des garnitures du disque, il est prévu un dispositif de rattrapage d'usure qui comprend des moyens à rampes 211 disposées circonférentiellement ; plus précisément, ces moyens à rampes 211, figures 28 et 29, sont métalliques et constitués d'un anneau présentant des rampes 215 disposées circonférentiellement sur sa face tournée vers le plateau de pression 201 ; sur sa face opposée, ledit anneau présente une zone d'appui 214 constituée par une arête supérieure disposée en arc de cercle centré sur l'axe de l'embrayage. Bien entendu, ladite zone d'appui 214 peut être continue ou discontinue. Les moyens à rampes 211 sont centrés intérieurement par la surépaisseur du plateau de pression 201.

Le plateau de pression 201 présente, sur sa face tournée vers le fond du couvercle 202, des plots 204 venus ici de moulage répartis circonférentiellement à une distance l'un de l'autre qui correspond à celle qui sépare circonférentiellement deux rampes 215 successives, les plots 204 étant destinés à coopérer chacun avec une rampe 215.

Les moyens à rampes 211 sont placés axialement entre le diaphragme 203 et le plateau de pression 201 en sorte que les plots 204 reçoivent les rampes 215 et le diaphragme 203 coopère avec la zone d'appui 214 qui constitue ainsi les moyens d'appui par l'intermédiaire desquels le diaphragme 203 agit sur le plateau de pression 201.

La périphérie interne des moyens à rampes 211 est munie radialement d'une denture 218.

Le dispositif de rattrapage d'usure comprend par ailleurs une roue à rochet 220 à dents inclinées 221 montée tournante autour d'un axe 222 qui porte également une vis sans fin 213 ; le filet et le pas de la vis sans fin 213 sont adaptés à la denture 218 des moyens à rampes 211 ; la vis sans fin 213 est amenée à coopérer avec la denture 218 dans les conditions qui seront décrites ci-après.

Ici, les dents 221 sont taillées à la périphérie externe du filet de la vis sans fin 213. Cette disposition, mieux visible sur les figures 30 et 31, est économique et simple.

L'axe 222 est porté à rotation par un support 212, mieux visible sur les figures 29 et 30, en tôle découpée et pliée, en forme générale de L ayant deux ailes 223, 224 dont l'une, 223, est destinée à supporter l'axe 222 et dont l'autre, 224, est destinée à la fixation du support 212 sur le couvercle 202 ; à cet effet, l'aile 223 porte un trou circulaire 225 adapté à recevoir l'extrémité de l'axe 222, ici filetée pour recevoir un écrou de fixation. Selon une variante non représentée, l'aile 223 est munie d'un taraudage.qui reçoit l'extrémité filetée de l'axe 222, ceci permettant de supprimer l'écrou.

Lorsque le support 212 est monté sur le couvercle 202, l'aile 224 est fixée sur le fond du couvercle 202 tandis que l'aile 223 traverse le diaphragme 203 entre deux de ses doigts qui, si nécessaire, peuvent écartés circonférentiellement plus que ne sont deux à deux les autres doigts.

Le support 212 est adapté à recevoir un organe élastique 272, ici métallique et de plus faible épaisseur que le support, mieux visible sur la figure 32 ; l'organe élastique 272 est en forme générale de cavalier et comprend un corps plan 273 portant à chacune de ses extrémités un bras 274 muni d'un trou 275 adapté à recevoir l'axe 222 ; les deux bras 274 sont parallèles et s'étendent du même côté et globalement perpendiculairement par rapport au corps 273. Sur l'un de ses bords longitudinaux, le corps 273 se prolonge, entre les bras 274, selon une extension 284 qui comprend une première partie 284A dans le prolongement du corps 273, une deuxième partie 284B dirigée dans le sens opposé à celui des bras 274 en faisant un angle aigu avec le corps 273, une troisième partie 284C formant un U avec la deuxième partie 284B et s'étendant parallèlement à celle-ci, et une quatrième partie 284D dirigée vers le corps 273 en étant parallèle à celui-ci, à un niveau légèrement supérieur en sorte qu'elle s'étend entre les bras 274 ; cette quatrième partie 284D reçoit, par exemple par rivetage, une plaquette en forme de T dont le pied 235 constitue une languette de commande 235 ; les deux bras du T traversent chacun une échancrure 274A ménagée dans chacun des bras 274 en sorte que la course de la languette de commande 235, parallèlement au corps 273, est limitée, au moins en éloignement du corps 273 ; sur son bord longitudinal opposé à celui où se situe l'extension 284, le corps 273 porte un cliquet anti-retour 236 constitué ici de deux lames 236A, 236B de longueurs légèrement différentes s'étendant globalement perpendiculairement au corps 273 du même côté, par rapport à celui-ci, que celui ou s'étendent les bras 274 ; l'arête intérieure de la languette de commande 235 et l'extrémité libre des lames 236A et 236B sont à distance l'une de l'autre et positionnées en sorte que, lorsque l'organe élastique 272 et la roue à rochet 220 sont montés dans le support 212, le cliquet anti-retour 236 et la languette de commande 235 coopèrent chacun élastiquement avec un pied de dent de la roue à rochet 220. Le bras 274, de l'organe élastique 272, en appui sur l'aile 223 du support 212, présente un trou 253, figure 32, destiné à coopérer avec un téton 254, figure 30, prévu sur la face interne de ladite aile 223 pour positionnement angulaire de l'organe élastique 272 par rapport au support 212. Le téton 254 peut être remplacé par une goupille ou toute autre protubérance.

L'axe 222 porte une collerette 244 au voisinage de son extrémité non filetée ; autour de l'axe 222 est placé un ressort hélicoïdal 240 constituant le moyen élastique de rattrapage, comme décrit ci-dessous ; ici, le ressort 240 est enroulé autour de l'axe 222 en étant placé dans un logement 251 prévu à l'intérieur de la roue à rochet 220 (ou vis sans fin 213) ; la roue à rochet 220 (ou vis sans fin 213) est centrée par rapport à l'axe 222, d'un côté, en portant sur la collerette 244 dudit axe et, de l'autre côté, grâce à un redent circulaire intérieur 252 qu'elle présente ; le ressort 240 est ainsi placé axialement entre ledit redent 252 et la collerette 244 de l'axe 222 ; la roue à rochet 220 est au droit du cliquet anti-retour 236 qui, par coopération avec les dents 221 inclinées de la roue à rochet 220, empêche de tourner la roue à rochet 220, donc la *vis* sans fin 213, dans le sens contraire à celui des aiguilles d'une montre, par rapport à la figure 28.

Le support 212, portant la roue à rochet 220, la vis sans fin 213 et le ressort hélicoïdal 240, étant solidaire du couvercle 202, le diaphragme 203 se déplace par rapport à lui lors des opérations de débrayage et de ré-embrayage ; le diaphragme 203 est adapté par l'un de ses doigts, ici le doigt 250, à coopérer avec la languette de commande 235 de l'organe élastique 272 ; on comprendra que, grâce à cette disposition, lors du basculement du diaphragme 203 lors des opérations d'embrayage, la languette de commande 235 se déplace de la droite vers la gauche, par rapport à la figure 40, et, par coopération avec les dents 221 de la roue à rochet 220, est amenée à faire tourner la roue à rochet 220 dans le sens horaire ; lorsque le doigt 250 du diaphragme bascule vers la droite lors du débrayage, l'élasticité de l'organe élastique 272 et l'inclinaison des dents 221 font que la languette de commande 235 se déplace vers la droite en montant sur les dents 221 qui sont maintenues fixes en rotation par le cliquet anti-retour 236.

Le dispositif de rattrapage d'usure qui vient d'être décrit fonctionne comme suit sachant que la vis 213 peut entraîner la denture 218 mais pas l'inverse, le système denture 218 vis sans fin 213 étant irréversible.

La figure 28 représente l'embrayage engagé, les garnitures du disque de friction étant à l'état neuf et serrées entre le plateau de réaction, non représenté, et le plateau de pression 201. Dans cette position, la languette de commande 235 et le cliquet anti-retour 236 ont leur extrémité au pied d'une dent de la roue à rochet 220.

Lorsque l'embrayage est débrayé, l'extrémité des doigts du diaphragme 203 est sollicitée dans le sens de la flèche F vers le fond du couvercle 202 ; dans son déplacement, le doigt 250 libère progressivement la languette de commande 235 dont l'extrémité suit la rampe inclinée constituée par la dent dans le pied de laquelle elle se trouvait dans l'étape précédente, les dents 221 de la roue à rochet 220 étant réalisées en sorte que, lors de cette course de débrayage garnitures neuves, l'extrémité de la languette de commande 235 ne saute pas une dent, le cliquet anti-retour 236 maintenant la roue à rochet 220 ; ceci est obtenu par la venue en butée de la languette 235 contre le bord des échancrures 274A des ailes 274 du support 272.

Lorsque les garnitures s'usent, comme on le sait le plateau de pression 201, toujours soumis à l'effort axial du diaphragme 203, se rapproche du plateau de réaction qui est fixe axialement comme le couvercle 202 ; le doigt 250 du diaphragme 203 se rapproche donc du plateau de réaction, donc de l'extrémité ouverte du couvercle 202, en entraînant dans son mouvement la languette de commande 235 ; la roue à rochet 220 tourne autour de son axe dans le sens horaire, sens pour lequel le cliquet anti-retour 236 n'assure pas sa fonction mais peut sauter d'une dent à l'autre ; cet entraînement en rotation de la roue à rochet 220 conduit la vis sans fin 213 à tourner également sur son axe ; les moyens de rampes 211 étant immobilisés par rapport au couvercle 203 sous l'effet de la charge du diaphragme 203, la vis sans fin 213 qui engrène avec la denture 218 des moyens de rampes 211 se visse en quelque sorte sur cette denture 218 en comprimant le ressort hélicoïdal 240, le sens du filet de la vis sans fin 213 étant prévu en sorte qu'il en soit ainsi.

Lors de l'opération de débrayage qui suit la phase d'usure qui vient d'être décrite, le plateau de pression 201 libère les garnitures en s'éloignant d'elles sous l'action des languettes tangentielles 209 qui ramènent vers le fond du couvercle 202 le plateau de pression 201 ainsi que les moyens à rampes 211 en contact avec le diaphragme 203 par leurs zones d'appui 214 et avec les plots 204 du plateau de pression 201 par leurs rampes 215. Le ressort hélicoïdal 240 sollicite la vis sans fin 213 vers l'aile 223 du support 212, dont elle s'est éloignée en phases d'usure, c'est-à-dire de la droite vers la gauche par rapport aux figures 29 et 30 ; la charge du diaphragme 203 n'étant plus appliquée sur les moyens à rampes 211, le seul effort à vaincre pour pouvoir faire tourner ces moyens à rampes 211 par rapport au plateau de pression 201 est l'effort de rappel des languettes tangentielles 209 ; si la charge du ressort hélicoïdal 240 est suffisante pour vaincre cet effort, alors le ressort 240 déplace la vis sans fin 213 qui est empêchée de tourner sur elle-même par la pression du cliquet anti-retour 236 et qui entraînera ultérieurement la denture 218 : en tournant sur elles-mêmes, les rampes 215 des moyens à rampes 211, par coopération avec les plots 204 du plateau de pression 201, éloigneront le plateau de pression 201 du fond du couvercle 202, augmentant ainsi la distance axiale entre la face de travail du plateau de pression 201 et les zones d'appui 214 des moyens à rampes 211, rattrapant ainsi au moins en partie, comme précédemment, l'usure des garnitures. La charge du ressort hélicoïdal 240 étant fonction de la quantité dont il aura été comprimé par la vis sans fin 213 durant les phases d'usure, on voit que plusieurs opérations d'embrayage et de débrayage peuvent être nécessaires avant que le dispositif de rattrapage de jeu n'entre en phase de rattrapage proprement dite, ceci étant fonction du dimensionnement relatif des pièces concernées ; à titre d'exemple, celles-ci peuvent être réalisées de telle sorte que cette phase de rattrapage proprement dite n'intervienne, la première fois, qu'après une usure correspondant à trois dixièmes de millimètres.

Si l'usure a été suffisante pour que la roue à rochet 220 ait tourné suffisamment pour qu'au retour la languette 235 saute une dent, lors de l'opération d'embrayage, la languette 235, poussée par le doigt 250, fait tourner la roue à rochet 220 et les moyens à rampes 211, non encore serrés par le diaphragme 203, tournent et rattrapent l'usure ; en fin d'opération de rattrapage, le diaphragme, la roue à rochet 220, le cliquet anti-retour 236 et la languette de commande 235 retrouvent leur position qu'ils occupaient à la figure 28.

La vis sans fin 213 et la roue à rochet 220 étant taillées dans une même pièce, comme on le voit, le support 212 équipé de cette même pièce, de l'organe élastique 272, du ressort 240 et de l'axe 222 constitue un sous-ensemble prêt à être installé sur le couvercle 202.

Selon la variante qui vient d'être décrite, le ressort 240 est enroulé autour de l'axe 222 en étant logé à l'intérieur de la pièce unique compacte axialement formant roue à rochet 220 et vis sans fin 213 ; selon la variahte de la figure 33, le ressort est à l'extérieur de ladite pièce unique en étant réalisé sous forme d'un étrier élastique 340 chevauchant ladite pièce unique.

Il est possible de réaliser cette fonction élastique en supportant ladite pièce élastiquement par rapport au couvercle ; ainsi, comme le montrent les figures 34 et 35, des lamelles élastiques liées, d'un côté, à l'axe autour duquel est montée à rotation ladite pièce unique et, de l'autre côté, au couvercle 202 peuvent être utilisées pour ce faire : selon la figure 34, les lamelles 440 sont droites et liées au couvercle sur une patte rabattue de celui-ci ; selon la figure 35, ce sont les lamelles 540 qui présentent une patte rabattue pour liaison au couvercle.

Comme le montrent les figures 29, 30, 32 et 35, l'axe 222 est incliné, par rapport à un plan perpendiculaire à l'axe de l'embrayage, d'un angle égal à celui du filet de la vis sans fin 213 ; grâce à cette disposition, les dents constituant la denture 218 sont des dents droites, ce qui améliore la transmission par engrènement. En outre l'inclinaison de l'axe 222 rend moins sensible le dispositif de rattrapage d'usure aux vibrations torsionnelles.

Comme cela a été décrit précédemment, lors de l'opération de débrayage qui suit une phase d'usure, le plateau de pression 201 libère les garnitures en s'éloignant d'elles sous l'action des languettes tangentielles 209 qui ramènent vers le fond du couvercle 202 le plateau de pression 201 et les moyens à rampes 211 ; pour être sûr que le ressort hélicoïdal 240 puisse actionner les moyens à rampes 211 sans être gêner par l'effort axial de rappel dû aux languettes tangentielles 209, il peut être avantageux de limiter la course du plateau de pression 201 lors des opérations de débrayage.

La variante de la figure 36 présente une disposition le permettant ; selon cette variante, le plateau de pression 201 porte un pion 301 axial, pouvant être par exemple un prolongement d'un rivet de fixation des languettes 209 au plateau 201 ; le pion 301 porte deux collerettes 302, 303 définissant des butées axiales.

Une bague 305 entoure le pion 301 et sa longueur axiale est inférieure à la longueur qui sépare axialement les deux collerettes 302 et 303, la différence desdites longueurs définissant un jeu axial.

La bague 305 est emmanchée dans un trou du bord du couvercle 202 dont elle est solidaire par friction, les butées axiales 302 et 303 étant disposées de part et d'autre dudit bord ; ledit jeu axial définit ainsi la course de rappel du plateau 201 par les languettes 209 ; ce jeu axial est constant quelle que soit l'usure des garnitures ; en effet, en cas d'usure de celles-ci, la bague 305 est déplacée par l'effort du diaphragme qui est supérieur à l'effort de friction entre la bague 305 et le couvercle 202, lequel effort étant supérieur à l'effort axial dû aux languettes 209.

Dans le cadre d'un embrayage du type tiré, tels que ceux qui viennent d'être décrits, le support, tel que le support 212, peut venir directement du couvercle, par découpe et pliage.

Les moyens élastiques à action axiale peuvent avoir une autre forme comme décrit par exemple dans les demandes FR 97 11058 du 5 septembre 1997, FR 97 04213 et FR 97 04214 du 7 avril 1997.

Ainsi en se reportant aux figures 4,5 et 3,4 respectivement des documents FR 97 11058 et FR 97 04214 on voit qu'une rondelle Belleville est montée en série avec le diaphragme pour constituer les moyens élastiques embrayeurs à action axiale de l'embrayage. Le diaphragme étant en contact avec la languette de commande directement ou indirectement, par l'intermédiaire de moyens de transmission d'efforts intervenant entre la rondelle Belleville et le diaphragme.

La rondelle Belleville est une rondelle d'assistance du type positive.

Cette rondelle d'assistance est par exemple dimensionnée en fonction des moyens de progressivité montés au sein du disque de friction.

Bien entendu la rondelle d'assistance peut être montée en parallèle avec le diaphragme , par exemple en agissant entre le couvercle et l'extrémité interne des doigts du diaphragme, tel que décrit dans le document FR-A 2 728 638.

Bien entendu comme décrit dans la demande FR-97 11058 (figure 1 à 3) et dans la demande FR-97 04213 (figure 1 à 4) les moyens élastiques peuvent comporter deux rondelles Belleville, l'une positive, l'autre négative, commandées par un dispositif débrayeur distinct des rondelles Belleville agissant sur l'une des rondelles Bellevilles languette de commande.

On appréciera que le dispositif de rattrapage d'usure est peu sensible aux vibrations axiales et torsionnelles, notamment à celles dues aux vibrations axiales du vilebrequin du moteur du véhicule automobile. Il est également peu sensible aux effets de la force centrifuge et aux phénomènes de déformations thermiques et de corrosion.

En effet l'irréversibilité de l'action de la vis sans fin sur une denture solidaire des moyens de rampe en liaison avec les moyens anti-retour empêche un fonctionnement intempestif du dispositif de rattrapage d'usure, compte tenu des vibrations, alors qu'il n'y a pas d'usure. Ainsi le plateau dépression ne peut pas entraîner la vis sans fin par l'intermédiaire des moyens de rampes.

La présence du support porté par le couvercle et portant la pièce de commande et les moyens anti-retour, en combinaison avec le centrage les moyens à rampes par le plateau de pression, permet au dispositif de rattrapage d'usure de bien résister aux phénomènes de la force centrifuge.

L'ensemble roue à rochet-vis sans fin-ressort hélicoïdal est peu encombrant et ne gêne pas la ventilation de l'embrayage. Cette ventilation est favorisée par la présence des ouvertures dans les moyens à rampes, ainsi que par la présence des plots.

L'action des moyens élastiques à action axiale sur la pièce de commande coopérant avec la roue à rochet permet de décoincer le dispositif de rattrapage d'usure.

## Revendications

1. Embrayage à friction, comportant un plateau de réaction destiné à être calé en rotation sur un arbre menant, un disque de friction, portant à sa périphérie externe des garnitures de friction, destiné à être calé en rotation sur un arbre mené, un plateau de pression (1, 51, 201), un couvercle (2, 52, 202) fixé sur le plateau de réaction, des moyens élastiques à action axiale (3, 53, 203) agissant entre, d'une part, le couvercle (2, 52, 202) et, d'autre part, le plateau de pression (1, 51, 201) par l'intermédiaire de moyens d'appui (14, 214), le plateau de pression (1, 51, 201) étant solidaire en rotation du couvercle (2, 52, 202) tout en pouvant se déplacer axialement par rapport à lui et étant soumis à l'action de moyens élastiques de rappel (9, 209) rappelant le plateau de pression (1, 51, 201) axialement vers le couvercle (2, 52, 202), ledit embrayage comportant également un dispositif de rattrapage d'usure comprenant des moyens à rampes (11, 54, 211) disposées circonférentiellement, placés axialement entre les moyens d'appui (14, 214) et le plateau de pression (1, 51, 201) et adaptés à être entraînés en rotation grâce à une denture (18, 59, 218) qu'ils portent à leur périphérie et avec laquelle coopère une vis sans fin (13, 63, 213), des moyens d'entraînement en rotation (20, 60, 220) de la vis sans fin (13, 63, 213) étant prévus, rendus opérationnels par l'usure des garnitures de friction lorsque l'embrayage est embrayé, ainsi que des moyens anti-retour (36, 78, 98, 236) empêchant la vis sans fin (13, 63, 213) de tourner dans le sens contraire de celui dans lequel elle est entraînée en rotation par les moyens d'entraînement en rotation (20, 60, 220) lorsqu'ils sont opérationnels, les moyens d'entraînement en rotation (20, 60, 220) de la vis sans fin (13, 63, 213) étant constitués par une roue à rochet solidaire en rotation de la vis sans fin (13, 63, 213), et les moyens anti-retour étant constitués par un cliquet (36) qui coopère avec la roue à rochet (20), **caractérisé par le fait que** le cliquet anti-retour (36, 78, 236) fait partie d'un organe élastique (31) qui porte également une languette de commande (35, 235) pour l'actionnement en rotation de la roue à rochet (20, 60, 220).

2. Embrayage à friction selon la revendication 1, **caractérisé par le fait que** la course de la languette de commande (35, 76, 235), lors de l'opération de débrayage, est limitée par une butée dite de contrôle (27-28, 71, 274A).

3. Embrayage à friction selon la revendication 2, **caractérisé par le fait que** la vis sans fin (13, 63, 213) et la roue à rochet (20, 60, 220) sont portées par un axe (22, 67, 222) supporté par un support (12, 62, 212).

4. Embrayage à friction selon la revendication 3, **caractérisé par le fait que** le support (12) est en forme de U ayant une âme (19) et deux ailes (23, 24) destinées à supporter l'axe (22) et les ailes (23, 24) du support (12) se prolongent selon des bras (27, 28) fixés par leur extrémité sur le bord d'une ouverture transversale (6) du couvercle (2) prévue dans une excroissance radiale (5) définissant un logement pour le dispositif de rattrapage d'usure.

5. Embrayage à friction selon la revendication 4, **caractérisé par le fait que** l'organe élastique (31) est en forme générale de crosse dont chaque extrémité est munie d'un retour vers l'intérieur, et la partie de plus grande longueur (32) de la crosse croit en largeur vers son extrémité se terminant selon un retour (34) qui porte en bout la languette de commande (35), la partie de plus petite longueur (33) de la crosse ayant son retour (36) formant cliquet anti-retour qui s'étend globalement parallèlement à la languette de commande (35) en étant à distance de celle-ci en sorte que, lorsque l'organe élastique (31) et la roue à rochet (20) sont montés dans le support (12), le cliquet anti-retour (36) et la languette de commande (35) coopèrent chacun avec un pied de dent.

6. Embrayage à friction selon la revendication 5, **caractérisé par le fait que**, pour son montage dans le support (12), l'organe élastique (31) porte latéralement des bras en équerre (37, 38) disposés de part et d'autre de la partie élastique en forme de crosse, orthogonalement par rapport à celle-ci, et l'extrémité libre des bras (37; 38) en équerre porte des trous (39) pour l'axe (22).

7. Embrayage à friction selon la revendication 3, **caractérisé par le fait que** le support (12) équipé de la vis sans fin (13), de la roue à rochet (20), de l'organe élastique (31), du ressort (40) et de l'axe (22) constitue un sous-ensemble prêt à être installé dans le couvercle (2).

8. Embrayage à friction selon la revendication 5, **caractérisé par le fait que** la partie de grande longueur (32) de la crosse de l'organe élastique (31) vient en butée contre les bras (27, 28) du support (12).

9. Embrayage à friction selon la revendication 3, **caractérisé par le fait que** le support (62) est en forme de U, ayant une âme (64) et deux ailes (65, 66), chacune portant un trou (61) adapté à recevoir l'axe (67) du dispositif, l'âme (64) portant latéralement une patte (68) à l'équerre dirigée vers l'extérieur destinée à être fixée sur le rebord externe du couvercle (52), et les ailes (65, 66) du support (62) présentent, du côté opposé à celui où est située la patte (68), un prolongement axial dont l'extrémité est pliée vers l'extérieur pour constituer une patte de fixation (69) parallèle à la patte (68) ci-dessus et destinée à être fixée au fond du couvercle (52).

10. Embrayage à friction selon la revendication 9, **caractérisé par le fait que**, sur leur tranche dirigée vers l'âme (64), lesdits prolongements sont munis de retours (71) dirigés l'un vers l'autre en s'étendant globalement parallèlement à l'âme (64) et destinés à constituer des butées.

11. Embrayage à friction selon la revendications 10, **caractérisé par le fait que** l'organe élastique (72) est en forme de cavalier et comprend un corps (73) plan allongé portant à chacune de ses extrémités un bras (74) muni d'un trou (75) adapté à recevoir l'axe (67), et, sur l'un de ses bords longitudinaux, le corps (73) se prolonge selon une extension en oblique (84) du même côté que celui où sont placés les bras (74), des échancrures (82, 83) ménagées dans le corps (73) limitant l'extension (84) par rapport aux extrémités du corps (73) portant les bras (74), l'extrémité libre de l'extension (84) étant munie d'un retour (85) qui se prolonge selon une languette de commande (76) s'étendant en direction du corps (73) en étant globalement parallèle à celui-ci, une découpe (77) étant ménagée dans l'extension (84), et, à la faveur de cette découpe (77), et d'échancrures (79, 80, 81) dans le corps (73), est réalisé le cliquet anti-retour (78).

12. Embrayage à friction selon la revendication 3, **caractérisé par le fait que** le support (212) est en forme générale de L ayant deux ailes (223, 224) dont l'une (223) est destinée à supporter l'axe (222) et dont l'autre (224) est destinée à la fixation du support (212) sur le couvercle (202), l'aile (223) supportant l'axe traversant le diaphragme (203) entre deux de ses doigts.

13. Embrayage à friction selon la revendication 12, **caractérisé par le fait que** l'organe élastique (272) est en forme générale de cavalier et comprend un corps (273) plan portant à chacune de ses extrémités un bras (274) muni d'un trou (275) adapté à recevoir l'axe (222), les deux bras (274) étant parallèles et s'étendant du même côté et globalement perpendiculairement par rapport au corps (273), et, sur l'un de ses bords longitudinaux, le corps (273) se prolonge selon une extension (284) qui comprend une première partie (284A) dans le prolongement du corps (273), une deuxième partie (284B) dirigée dans le sens opposé à celui des bras (274) en faisant un angle aigu avec le corps (273), une troisième partie (284C) formant un U avec la deuxième partie (284B) et s'étendant parallèlement à celle-ci, et une quatrième partie (284D) dirigée vers le corps (273) en étant parallèle à celui-ci, à un niveau légèrement supérieur en sorte qu'elle s'étend entre les bras (274), cette quatrième partie (284D) constituant directement ou non une languette de commande (235), le corps (273) portant, sur son bord longitudinal opposé à celui où se situe l'extension (284), le cliquet anti-retour (236).

14. Embrayage à friction selon la revendication 13, **caractérisé par le fait qu'**une échancrure (274A) ménagée dans chacun des bras (274) limite la course de la languette de commande (235), parallèlement au corps (273), au moins en éloignement du corps (273).

15. Embrayage à friction selon la revendication 1, **caractérisé par le fait que** les moyens élastiques à action axiale (3, 53, 203) comportent un diaphragme agissant sur la languette de commande.

## Patentansprüche

1. Reibungskupplung, umfassend eine Gegendruckplatte, die drehfest auf einer Antriebswelle anbringbar ist, eine an ihrem Außenumfang Reibbeläge tragende Reibscheibe, die drehfest auf einer Abtriebswelle anbringbar ist, eine Druckplatte (1, 51, 201), einen an der Gegendruckplatte befestigten Deckel (2, 52, 202), axial wirkende elastische Mitteln (3, 53, 203), die zwischen dem Deckel (2, 52, 202) einerseits und über Anlagemittel (14, 214) der Druckplatte andererseits wirken, wobei die Druckplatte (1, 51, 201) drehfest mit dem Deckel (2, 52, 202) verbunden ist, während sie sich in Bezug auf diesen in Axialrichtung bewegen kann und der Wirkung von elastischen Rückstellmitteln (9, 209) ausgesetzt ist, die die Druckplatte (1, 51, 201) in Axialrichtung zum Deckel (2, 52, 202) hin zurückstellen, wobei die Kupplung außerdem eine Verschleißnachstellvorrichtung mit um den Umfang angeordneten Rampenmitteln (11, 54, 211) umfasst, die axial zwischen den Anlagemitteln (14, 214) und der Druckplatte (1, 51, 210) angeordnet sind und mittels einer Verzahnung (18, 59, 218), mit der sie an ihrem Umfang versehen sind, drehangetrieben werden können, wobei mit der Verzahnung eine Schnecke (13, 63, 213) zusammenwirkt und wobei Mittel (20, 60, 220) zum Drehantrieb der Schnecke (13, 63, 213), die durch den Verschleiß der Reibbeläge bei eingerückter Kupplung in Betriebsbereitschaft gesetzt werden, sowie Rückdrehsicherungsmittel (36, 78, 98, 236) vorgesehen sind, die die Schnecke (13, 63, 213) daran hindern, sich in der Gegenrichtung zu der Richtung zu drehen, in der sie durch die Drehantriebsmittel (20, 60, 220) angetrieben wird, wenn sie betriebsbereit sind, wobei die Mittel (20, 60, 220) zum Drehantrieb der Schnecke (13, 63, 213) aus einem drehfest mit der Schnecke (13, 63, 213) verbundenen Klinkenrad und die Rückdrehsicherungsmittel aus einer mit dem Klinkenrad (20) zusammenwirkenden Sperrklinke (36) bestehen, **dadurch gekennzeichnet, dass** die Rückdrehsicherungssperrklinke (36, 78, 236) Teil eines elastischen Glieds (31) ist, das des Weiteren eine Betätigungszunge (35, 235) zur Drehbetätigung des Klinkenrads (20, 60, 220) trägt.

2. Reibungskupplung nach Anspruch 1 **dadurch gekennzeichnet, dass** der Verstellweg der Betätigungszunge (35, 76, 235) beim Auskuppeln durch einen sogenannten Steueranschlag (27 - 28, 71, 274A) begrenzt wird.

3. Reibungskupplung nach Anspruch 2, **dadurch gekennzeichnet, dass** die Schnecke (13, 63, 213) und das Klinkenrad (20, 60, 220) von einer durch einen Träger (12, 62, 212) gestützten Achse (22, 67, 222) getragen werden.

4. Reibungskupplung nach Anspruch 3, **dadurch gekennzeichnet, dass** der Träger (12) in Form eines U mit einem Steg (19) und zwei Schenkeln (23, 24) vorliegt, die die Achse (22) stützen sollen, und die Schenkel (23, 24) des Trägers (12) entlang den Armen (27, 28) verlängert sind, die mit ihrem Ende am Rand einer in einer eine Aufnahme für die Verschleißnachstellvorrichtung bildenden, radialen Ausstülpung (5) vorgesehenen Queröffnung (6) des Deckels (2) befestigt sind.

5. Reibungskupplung nach Anspruch 4, **dadurch gekennzeichnet, dass** das elastische Glied (31) in allgemeiner Form eines Krummstücks vorliegt, von dem jedes Ende mit einem Rücksprung nach innen versehen ist, und der eine größere Länge aufweisende Teil (32) des Krummstücks zu seinem Ende hin in der Breite zunimmt und entlang einem Rücksprung (34) abschließt, der am Ende die Betätigungszunge (35) trägt, wobei der eine geringere Länge aufweisende Teil (33) des Krummstücks einen Rücksprung (36) aufweist, der die Rückdrehsicherungssperrklinke bildet, welche sich allgemein parallel zur Betätigungszunge (35) und von ihr beabstandet erstreckt, so dass die Rückdrehsicherungsperrklinke (36) und die Betätigungszunge (35) jeweils mit einem Zahnfuß zusammenwirken, wenn das elastische Glied (31) und das Klinkenrad (20) im Träger (12) angebracht sind.

6. Reibungskupplung nach Anspruch 5, **dadurch gekennzeichnet, dass** das elastische Glied (31) für seine Montage in den Träger (12) seitlich mit abgewinkelten Armen (37, 38) versehen ist, die auf beiden Seiten des in Form eines Krummstücks ausgebildeten, elastischen Teils orthogonal zu diesem angeordnet sind, und das freie Ende der abgewinkelten Arme (37; 38) Löcher (39) für die Achse (22) aufweist.

7. Reibungskupplung nach Anspruch 3, **dadurch gekennzeichnet, dass** der mit der Schnecke (13), dem Klinkenrad (20), dem elastischen Glied (31), der Feder (40) und der Achse (22) versehene Träger (12) eine einbaufertige Untergruppe zum Einbau in den Deckel (2) bildet.

8. Reibungskupplung nach Anspruch 5, **dadurch gekennzeichnet, dass** der eine größere Länge aufweisende Teil (32) des Krummstücks des elastischen Glieds (31) an die Arme (27, 28) des Trägers (12) anstößt.

9. Reibungskupplung nach Anspruch 3, **dadurch gekennzeichnet, dass** der Träger (62) in Form eines U mit einem Steg (64) und zwei Schenkeln (65, 66) vorliegt, die jeweils mit einem Loch (61) versehen sind, das zur Aufnahme der Achse (67) der Vorrichtung ausgeführt ist, wobei der Steg (64) seitlich einen abgewinkelten, nach außen gerichteten Ansatz (68) trägt, der am Außenrand des Deckels (52) befestigt werden soll, und die Schenkel (65, 66) des Trägers (62) auf der Seite, die der gegenüberliegt, auf der sich der Ansatz (68) befindet, eine axiale Verlängerung aufweisen, deren Ende nach außen gebogen ist, um einen Befestigungsansatz (69) zu bilden, der parallel zum obigen Ansatz (68) ist und am Boden des Deckels (52) befestigt werden soll.

10. Reibungskupplung nach Anspruch 9, **dadurch gekennzeichnet, dass** die Verlängerungen an ihrer zum Steg (64) gerichteten Endfläche mit Rücksprüngen (71) versehen sind, die zueinander gerichtet sind und sich dabei allgemein parallel zum Steg (64) erstrecken und Anschläge bilden sollen.

11. Reibungskupplung nach Anspruch 10, **dadurch gekennzeichnet, dass** das elastische Glied (72) in Form einer Klammer vorliegt und einen gestreckten, ebenen Körper (73) aufweist, der an jedem seiner Enden mit einem Arm (74) versehen ist, in dem ein zur Aufnahme der Achse (67) ausgeführtes Loch (75) ausgebildet ist, und der Körper (73) an einem seiner Längsränder auf der gleichen Seite, auf der die Arme (74) vorgesehen sind, gemäß einer schrägen Erweiterung (84) verlängert ist, wobei in dem Körper (73) ausgebildete bogenförmige Aussparungen (82, 83) die Erweiterung (84) bezüglich der die Arme (74) tragenden Enden begrenzen, wobei das freie Ende der Erweiterung (84) mit einem Rücksprung (85) versehen ist, der entlang einer sich in Richtung des Körpers (73) erstreckenden Betätigungszunge (76) verlängert ist und allgemein parallel zu dieser verläuft, wobei in der Erweiterung (84) ein Ausschnitt (77) ausgebildet ist und durch diesen Ausschnitt (77) und bogenförmige Aussparungen (79, 80, 81) im Körper (73) die Rückdrehsicherungssperrklinke (78) definiert ist.

12. Reibungskupplung nach Anspruch 3, **dadurch gekennzeichnet, dass** der Träger (212) in allgemeiner L-Form mit zwei Schenkeln (223, 224) vorliegt, von denen der eine (223) die Achse (222) stützen soll und der andere (224) zur Befestigung des Trägers (212) am Deckel (202) bestimmt ist, wobei der die Achse stützende Schenkel (223) die Federplatte (203) zwischen zwei ihrer Finger durchquert.

13. Reibungskupplung nach Anspruch 12, **dadurch gekennzeichnet, dass** das elastische Glied (272) in allgemeiner Form einer Klammer vorliegt und einen ebenen Körper (273) aufweist, der an jedem seiner Enden mit einem Arm (274) versehen ist, in dem ein zur Aufnahme der Achse (222) ausgeführtes Loch (275) ausgebildet ist, wobei die beiden Arme (274) parallel verlaufen und sich auf der gleichen Seite und allgemein senkrecht zum Körper (273) erstrecken und der Körper (273) an einem seiner Längsränder entlang einer Erweiterung (284) verlängert ist, die einen ersten Teil (284A) in der Verlängerung des Körpers (273), einen in entgegengesetzter Richtung zu der der Arme (274) unter Bildung eines spitzen Winkels mit dem Körper (273) gerichteten zweiten Teil (284B), einen ein U mit dem zweiten Teil (284B) bildenden dritten Teil (284C), der sich parallel dazu erstreckt, und einen zum Körper (273) gerichteten vierten Teil (284D), der sich parallel dazu und auf etwas größerer Höhe erstreckt, so dass er sich zwischen den Armen (274) erstreckt, umfasst, wobei dieser vierte Teil (284D) direkt oder indirekt eine Betätigungszunge (235) bildet, wobei der Körper (273) an seinem Längsrand, der dem gegenüberliegt, an dem sich die Erweiterung (284) befindet, die Rückdrehsicherungssperrklinke (236) aufweist.

14. Reibungskupplung nach Anspruch 13, **dadurch gekennzeichnet, dass** eine in jedem der Arme (274) ausgebildete bogenförmige Aussparung (274A) den Verstellweg der Betätigungszunge (235) parallel zum Körper (273) zumindest vom Körper (273) weg begrenzt.

15. Reibungskupplung nach Anspruch 1, **dadurch gekennzeichnet, dass** die axial wirkenden elastischen Mittel (3, 53, 203) eine auf die Betätigungszunge einwirkende Federplatte umfassen.

## Claims

1. Friction clutch, comprising a reaction plate intended to be rotationally fixed to a driving shaft, a friction disc carrying friction linings at its external periphery, intended to be rotationally fixed to a driven shaft, a pressure plate (1, 51, 201), a cover (2, 52, 202) fixed to the reaction plate, axially acting elastic means (3, 53, 203) acting between on the one hand the cover (2, 52, 202) and on the other hand the pressure plate (1, 51, 201) by means of abutment means (14, 214), the pressure plate (1, 51, 201) being rotationally fixed to the cover (2, 52, 202) whilst being able to move axially with respect to it and being subjected to the action of elastic return means (9, 209) returning the pressure plate (1, 51, 201) axially towards the cover (2, 52, 202), the said clutch also comprising a wear take-up device comprising circumferentially disposed ramp means (11, 54, 211) placed axially between the abutment means (14, 214) and the pressure plate (1, 51, 201) and adapted to be driven in rotation by means of teeth (18, 59, 218) which they carry at their periphery and with which a worm (13, 63, 213) cooperates, means (20, 60, 220) of driving the worm (13; 63, 213) in rotation being provided, made operational by the wear on the friction linings when the clutch is engaged, as well as non-return means (36, 78, 98, 236) preventing the worm (13, 63, 213) from turning in the direction opposite to that in which it is driven in rotation by the means (20, 60, 220) of driving in rotation when they are operational, the means (20, 60, 220) of driving the worm (13, 63, 213) consisting of a ratchet wheel rotationally fixed to the worm (13, 63, 213), and the non-return means consisting of a pawl (36) which cooperates with the ratchet wheel (20), **characterised by** the fact that the non-return pawl (36, 78, 236) forms part of an elastic member (31) which also carries a control tongue (35, 235) for rotationally actuating the ratchet wheel (20, 60, 220).

2. Friction clutch according to Claim 1, **characterised by** the fact that the travel of the control tongue (35, 76, 235), during the declutching operation, is limited by a so-called controlled stop (27-28, 71, 274A).

3. Friction clutch according to Claim 2, **characterised by** the fact that the worm (13, 63, 213) and the ratchet wheel (20, 60, 220) are carried by a spindle (22, 67, 222) supported by a support (12, 62, 212).

4. Friction clutch according to Claim 3, **characterised by** the fact that the support (12) is in the form of a U having a web (19) and two flanges (23, 24) intended to support the spindle (22) and the flanges (23, 24) of the support (12) extending along arms (27, 28) fixed by their end to the edge of a transverse opening (6) in the cover (2) provided in a radial protrusion (5) defining a housing for the wear take-up device.

5. Friction clutch according to Claim 4, **characterised by** the fact that the elastic member (31) is in the general form of a tie bar, each end of which is provided with an inward return, and the longer part (32) of the tie bar increases in width towards its end terminating in a return (34) which carries at its end the control tongue (35), the shorter part (33) of the tie bar having its return (36) forming a non-return pawl which extends parallel overall to the control tongue (35) while being at a distance therefrom so that, when the elastic member (31) and the ratchet wheel (20) are mounted in the support (12), the non-return catch (36) and the control tongue (35) each cooperate with a tooth root.

6. Friction clutch according to Claim 5, **characterised by** the fact that, for mounting it in the support (12), the elastic member (31) carries laterally T-shaped arms (37, 38) disposed on each side of the elastic part in the form of a tie bar, orthogonally with respect to the latter, and the free end of the T-shaped arms (37; 38) carries holes (39) for the spindle (22).

7. Friction clutch according to Claim 3, **characterised by** the fact that the support (12) equipped with the worm (13), the ratchet wheel (20), the elastic member (31), the spring (40) and the spindle (22) constitutes a sub-assembly ready to be installed in the cover (2).

8. Friction clutch according to Claim 5, **characterised by** the fact that the long part (32) of the tie bar of the elastic member (31) comes into abutment against the arms (27, 28) of the support (12).

9. Friction clutch according to Claim 3, **characterised by** the fact that the support (62) is in the form of a U, having a web (64) and two flanges (65, 66), each carrying a hole (61) adapted to receive the spindle (67) of the device, the web (64) carrying laterally a lug (68) at right angles directly towards the outside, intended to be fixed to the external rim of the cover (52), and the flanges (65, 66) on the support (62) having, on the side opposite to the one where the lug 968) is situated, an axial extension whose end is folded towards the outside in order to constitute a fixing lug (69) parallel to the above lug (68) and intended to be fixed to the bottom of the cover (52).

10. Friction clutch according to Claim 9, **characterised by** the fact that, on the edge directed towards the web (64), the said extensions are provided with returns (71) directed towards each other and extending parallel overall to the web (64) and intended to constitute stops.

11. Friction clutch according to Claim 10, **characterised by** the fact that the elastic member (72) is in the shape of a staple and comprises an elongate flat body (73) carrying at each of its ends an arm (74) provided with a hole (75) adapted to receive the spindle (67) and, on one of its longitudinal edges, the body (73) is extended in an oblique extension (84) on the same side as that where the arms (74) are placed, scallops (82, 83) provided in the body (73) delimiting the extension (74) with respect to the ends of the body (73) carrying the arms (74), the free end of the extension (84) being provided with a return (85) which is extended in a controlled tongue (76) extending in the direction of the body (73) whilst being parallel overall thereto, a cutout (77) being provided in the extension (84) and, by means of this cutout (77) and scallops (79, 80, 81) in the body (73), the non-return pawl (78) is produced.

12. Friction clutch according to Claim 3, **characterised by** the fact that the support (212) is in an L shape overall, having two wings (223, 224), one (223) of which is intended to support the spindle (222) and the other (224) of which is intended for fixing the support (212) to the cover (202), the wing (223) supporting the spindle passing through the diaphragm (203) between two of its fingers.

13. Friction clutch according to Claim 13, **characterised by** the fact that the elastic member (272) is in the general shape of a staple and comprises a flat body (273) carrying at each of its ends an arm (274) provided with a hole (275) adapted to receive the spindle (222), the two arms (274) being parallel and extending on the same side and roughly perpendicular with respect to the body (273) and, on one of its longitudinal edges, the body (273) is extended in an extension (284) which comprises a first part (284A) in line with the body (273), a second part (284B) directed in the opposite direction to that of the arms (274) whilst making an acute angle with the body (273), a third part (284C) forming a U with the second part (284B) and extending parallel thereto, and a fourth part (284D) directed towards the body (273) whilst being parallel thereto, at a slightly higher level so that it lies between the arms (274), this fourth part (284D) constituting, directly or not, a control tongue (235), the body (273) carrying, on its longitudinal edge opposite to that where the extension (284) is situated, the non-return pawl (236).

14. Friction clutch according to Claim 13, **characterised by** the fact that a scallop (274A) provided in each of the arms (274) limits the travel of the control tongue (235), parallel to the body (273), at least away from the body (273).

15. Friction clutch according to Claim 1, **characterised by** the fact that the axially acting elastic means (3, 53, 203) comprise a diaphragm acting on the control tongue.
